# EUROPEAN PATENT APPLICATION

(11) **EP 0 562 490 A1**
(43) Date of publication of application: **29.09.1993**
(21) Application number: 93104567.8
(22) Date of filing: 19.03.1993
(51) Int. Cl.: B23C 3/35, B23Q 35/26

(54) **Device for calibrating key duplication machines**

(30) Priority: 24.03.1992 IT TV920042
(71) Applicant: Oliana, Pierluigi, I-31015 Conegliano (Treviso) (IT)
(72) Inventor: Oliana, Pierluigi, I-31015 Conegliano (Treviso) (IT)
(74) Representative: Modiano, Guido, Dr.-Ing.

(57) **Abstract**

The device for calibrating key duplication machines comprises a supporting frame (1) for a mill, a tracer point (4) and a movable carriage which is provided with locking clamps for a cut key and for an uncut key. The peculiarity of the device resides in the fact that a retractable gauge (5) is oscillatably associated with the frame (1) and can be selectively and simultaneously positioned on said tracer point (4) and on said mill. Calibration screws (13, 14) are provided for simultaneous resetting of the mill and the tracer point (4).

## Description

The present invention relates to a device for calibrating key duplication machines.

Key duplication machines are constituted by a frame which supports a mill, a tracer point and a movable carriage provided with locking clamps for a cut key and an uncut one.

In these known machines, it is normal to proceed as follows: the cut key is locked in a clamp which faces the tracer point and an uncut key is locked in a clamp which faces the mill.

Before cutting, it is necessary to grip a lever associated with the movable carriage so as to move said carriage, in order to move the cut key and the uncut key adjacent to the tracer point of the mill, performing a reset operation so as to obtain a duplicate key which is configured as closely as possible to the characteristics of the original cut key.

However, said known machines have the problem that they require the operator to calibrate the machine for each key to be cut, requiring a movement of the carriage and thus performing an operation which is intrinsically slow and is in any case linked to the skill of said operator.

The aim of the present invention is therefore to eliminate the problems described above in known types, by providing a device which allows an operator to rapidly and easily calibrate a key duplication machine so as to obtain duplicate keys which correspond to the original cut key.

Within the scope of the above aim, an important object is to provide a device which is structurally simple and has modest manufacturing costs.

Another important object is to provide a device which is reliable and safe in use.

This aim, these objects and others which will become apparent hereinafter are achieved by a device as defined in the appended claims.

Advantageously, means are furthermore provided which allow to reset the mill and the tracer point.

Further characteristics and advantages of the present invention will become apparent from the detailed description of some particular but not exclusive embodiments, illustrated only by way of non-limitative example in the accompanying drawings, wherein:
figure 1 is a side view of the arrangement of the device for calibrating key duplication machines in the step during which the simultaneous resetting of the mill and the tracer point occurs;
figure 2 is a top view of the device;
figure 3 is a front view of the condition of figure 1;
figure 4 is a view, similar to the view of figure 1, of a second embodiment of the device according to the invention.

With reference to the above figures, a key duplication machine is considered which is constituted by a frame 1 which has a duplicating head 2 from which a grinder or mill 3 and a tracer point 4 protrude; said mill and said tracer point are arranged so as to be mutually parallel.

The duplication machine furthermore comprises a movable carriage, not shown in the figures, with which a clamp for locking a cut key and a clamp for locking an uncut key are associated; said clamps can be respectively positioned, after the carriage has been moved by means of a lever, at the tracer point 4 and at the mill 3.

The device comprises a gauge 5 which is constituted by a bar 6; a tab 7 is associated centrally with said bar and protrudes therefrom, and is pivoted, at a pivot 8, between a pair of shoulders 9a and 9b which are rigidly coupled to, and protrude from, the frame 1 in the region adjacent to the mill 3 and to the tracer point 4.

The shape of the shoulders 9a and 9b is such as to allow the oscillation of the gauge 5 about the pivot 8, allowing, upon a 90^{o} rotation, the placement of the bar 6 adjacent to the frame 1, so as not to affect the region adjacent to the tracer point 4 and to the mill 3.

The gauge 5 can be selectively positioned so that the bar 6 is arranged approximately along a plane which is at right angles to the axis of the mill 3 and of the tracer point 4; this position can be locked by using a locking pin 10 having a stem which is removably inserted at a pair of first holes 11a and 11b defined on the shoulders 9a and 9b and at a second hole 12 defined on the tab 7; said first holes and said second hole have the same axis in the locking condition.

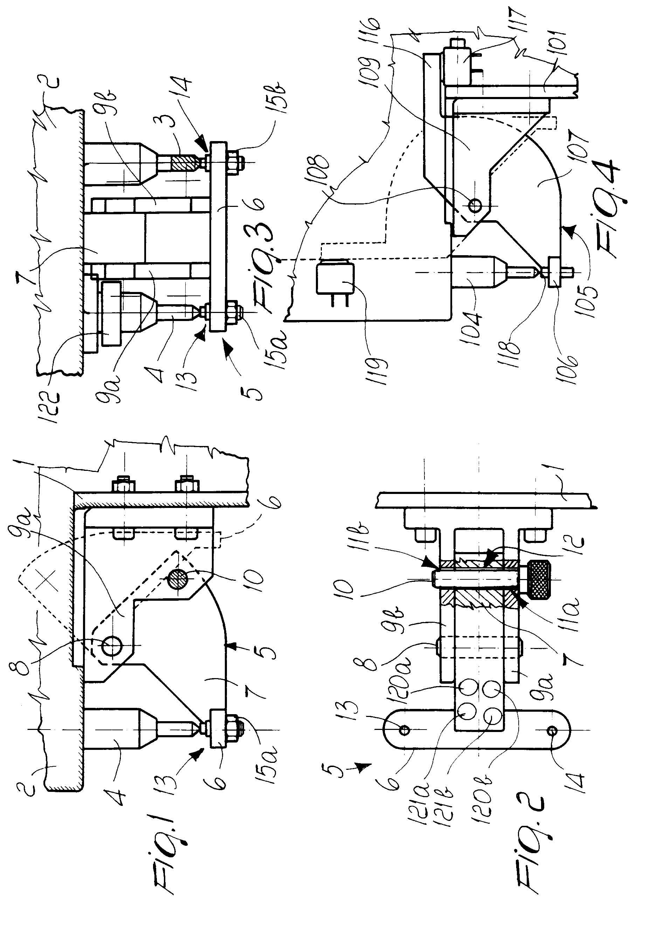

Furthermore, the shape of the tab 7 is such that, upon a counterclockwise rotation through approximately 90^{o} imparted to the gauge 5, the insertion of the stem of the locking pin 10 locks, in the position thus shown in broken lines in figure 1, the gauge 5 and particularly the bar 6 adjacent to the frame 1, so as to keep free the region adjacent to the mill 3 and to the tracer point 4.

Finally, there are means for resetting the mill and the tracer point; said means are constituted by first calibration screws 13 and second calibration screws 14 which are rotatably associated with the bar 6 at the region of interaction with the ends of the tracer point 4 and of the mill 3; a locking nut, designated by the numerals 15a and 15b, is associated with each one of said first and second screws on the opposite side with respect to the tracer point and to the mill.

The use of the device is thus as follows: before cutting the keys, the gauge 5 is arranged so that the bar 6 is adjacent to the end of the mill 3 and of the tracer point 4; said position is univocally determined by the arrangement of the locking pin 10 at the pair of first holes 11a and 11b and at the second hole 12.

The position of the first and second calibration screws is adjusted by acting at the locking nuts 15a and 15b, thus resetting the gauge.

The mill and the tracer point are thus reset simultaneously, resting their ends at the free ends of the first and second calibration screws.

This occurs without the operator having to grip the carriage actuation lever in any way.

Once this operation has been performed, the gauge 5 is turned through 90^{o}, locking it in the position adjacent to the frame 1 by means of the locking pin 10.

The operator can subsequently cut the keys, being certain that cutting will occur correctly.

It has thus been observed that the device according to the present invention has achieved the above described aim and objects. The device allows to simultaneously reset the mill and the tracer point while the carriage actuation lever is inactive, in a simple and rapid manner.

Key cutting is thus optimized while the device is structurally very simple and can also be applied to known duplication machines by means of a rapid intervention involving only a modest cost.

The device is naturally susceptible to numerous modifications and variations, all of which are within the scope of the same inventive concept.

Thus, for example, figure 4 illustrates a second embodiment, wherein the gauge 105 is constituted by a bar 106 associated with a tab 107 which is pivoted, by means of a pivot 108, to a pair of shoulders 109 which are rigidly coupled to the frame 101 and protrude therefrom.

On the side opposite to the bar 106 and in the region adjacent to the pivot 108, the tab 107 has an arm 116 which protrudes toward the frame 101; the free end of said arm interacts, in the condition shown in figure 4, i.e. with the gauge arranged in the calibration condition, adjacent to a first calibration magnet 117 which is associated with the frame 101.

Means for resetting the mill and the tracer point 104 are associated with the bar 106 and are constituted by sensors 118 which activate a visual or acoustic warning device when said sensors simultaneously detect the presence of the ends of the mill and of the tracer point.

For the condition of non-use of the gauge 105, the arm 116 can be arranged adjacent to a second magnet 119 for the inactive position by rotating said gauge through approximately 180^{o}.

A selector activates the first magnet 117 in the calibration condition, whereas it activates the second magnet 119 for the inactive position of the gauge.

Thus, in the two described embodiments, the activation of the gauge occurs by imparting thereto an upward rotation with respect to the mill and to the tracer point: as an alternative, the gauge can be activated or deactivated by imparting thereto a rotation on a plane which is at right angles to the preceding one and thus by imparting thereto a rotation along a plane which is approximately parallel to the plane of arrangement of the ends of the tracer point and of the mill.

The materials and the dimensions which constitute the structure may naturally be the most pertinent according to the specific requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Device for calibrating key duplication machines which comprise a supporting frame for a mill, a tracer point and a movable carriage provided with locking clamps for a cut key and for an uncut key, characterized in that a retractable gauge is oscillatably associated with said frame and can be selectively and simultaneously arranged on said tracer point and on said mill.

2. Device according to claim 1, characterized in that said gauge is constituted by a bar, a tab being centrally associated with said bar and protruding therefrom toward said frame, the terminal end of said tab being pivoted, by means of a pivot, between a pair of shoulders which protrude from said frame in the region adjacent to said mill and said tracer point.

3. Device according to claims 1 and 2, characterized in that the shape of said pair of shoulders allows the oscillation of said gauge about said pivot, a counterclockwise rotation producing the arrangement of said bar adjacent to said frame, leaving free the region adjacent to said tracer point and said mill.

4. Device according to claims 1 and 3, characterized in that said gauge can be selectively arranged in the calibration condition with said bar adjacent to the ends of said mill and said tracer point or to said frame by means of a locking pin.

5. Device according to claims 1 and 4, characterized in that the stem of said locking pin can be removably inserted at a pair of first holes, which have the same axis and are defined on said shoulders, and at a second hole defined on said tab.

6. Device according to claims 1 and 5, characterized in that said pair of first holes and said second hole have the same axis when said bar is arranged adjacent to said tracer point and to said mill.

7. Device according to claims 1 and 3, characterized in that it comprises means for locking said mill and said tracer point, said means being arranged on said bar in the regions underlying said tracer point and said mill in the calibration condition.

8. Device according to claims 1 and 7, characterized in that said means for resetting said mill and said tracer point are constituted by first and second calibration screws which are rotatably associated with said bar at the region underlying said tracer point and said mill in the calibration condition.

9. Device according to claims 1 and 8, characterized in that one or more locking nuts are associated with said first and second screws.

10. Device according to claims 1 and 3, characterized in that said counterclockwise rotation covers approximately 90^{o}.

11. Device according to claims 1 and 3, characterized in that said rotation occurs in an upward direction with respect to said tracer point and said mill.

12. Device according to claims 1 and 3, characterized in that said rotation occurs along a plane which is approximately at right angles to the plane of arrangement of the ends of said tracer point and of said mill.

13. Device according to one or more of the preceding claims, characterized in that said tab has, on the side opposite to said bar and in the region adjacent to said pivot, an arm which protrudes toward said frame, the free end of said arm interacting, in the calibration condition, with a first calibration magnet which is associated with said frame.

14. Device according to claims 1, 3 and 13, characterized in that said means for resetting said mill and said tracer point are constituted by sensors able to provide an enable signal, preferably to a visual or acoustic warning device, in the condition in which they simultaneously detect the presence of said tracer point and of said mill.

15. Device according to claims 1, 3 and 14, characterized in that said counterclockwise rotation covers approximately 180^{o}.

16. Device according to claims 1 and 15, characterized in that after said rotation through approximately 180^{o} said arm interacts with a second magnet for the inactive position, i.e. the non-calibration position, of said gauge.
